· Europäisches Patentamt

(19) European Patent Office

Office européen des brevets

(11) Veröffentlichungsnummer: **0 071 779**
**B1**

(12)   · **EUROPÄISCHE PATENTSCHRIFT**

(45) Veröffentlichungstag der Patentschrift:
16.01.85

(51) Int. Cl.⁴: **F 16 K 3/08, F 16 K 27/04**

(21) Anmeldenummer: 82106217.1

(22) Anmeldetag: 12.07.82

(54) **Mengenregulierventil.**

(30) Priorität: 14.07.81 DE 3127714
23.02.82 DE 3206481

(43) Veröffentlichungstag der Anmeldung:
16.02.83 Patentblatt 83/7

(45) Bekanntmachung des Hinweises auf die Patenterteilung:
16.01.85 Patentblatt 85/3

(84) Benannte Vertragsstaaten:
AT BE CH DE FR GB IT LI LU NL SE

(56) Entgegenhaltungen:
FR - A - 2 468 805
US - A - 2 908 293
US - A - 4 005 728

(73) Patentinhaber: FRIEDRICH GROHE
ARMATURENFABRIK GmbH & CO, Hauptstrasse 137,
D-5870 Hemer 1 (DE)

(72) Erfinder: Pawelzik, Manfred, Herringser Weg 5a,
D-4770 Soest (DE)
Erfinder: Körfgen, Harald, Elsternweg 5,
D-5800 Hagen 5 (DE)
Erfinder: Derr, Max, Rittershausstrasse 24,
D-5860 Iserlohn 5 (DE)
Erfinder: Herring, William Peter, Unter dem Asenberg 30,
D-5870 Hemer 1 (DE)
Erfinder: Jensen, Hans-Jürgen, Grosse Breite 39,
D-4777 Scheidingen (DE)

## Beschreibung

Die Erfindung betrifft ein Mengenregulierventil mit den im Oberbegriff des Anspruchs 1 angegebenen Merkmalen. Ventile dieser Gattung sind bekannt, wobei die äusseren Abmessungen dieser Ventile so ausgelegt sind, dass sie auch in Armaturen, die ursprünglich für Ventiloberteile mit einem axial bewegbaren Dichtkegel ausgelegt waren, eingesetzt werden können. Durch diese Bedingungen ist der Raum für die Anordnung der Dichtscheiben und der Dichtung zwischen der Armatur und der Ventilsitzscheibe äusserst begrenzt. Hinzu kommt, dass die Toleranzen der Einbautiefe in den verschiedenen Armaturen kompensiert werden müssen. Bei den bekannten Ventilen sind daher relativ komplizierte und aufwendige Massnahmen erforderlich, um einen dichten Anschluss des Ventileinsatzes mit dem Zuflusskanal der Armatur zu erreichen (FR-A Nr. 2468805).

Der Erfindung liegt die Aufgabe zugrunde, ein Mengenregulierventil der eingangs beschriebenen Gattung zu schaffen, bei dem mit einfachen Mitteln eine Abdichtung zwischen Ventilsitzscheibe und Zuflusskanal der Armatur ermöglicht wird, wobei die mit dem Einschraubvorgang erzeugte axiale Pressung der Dichtung auf die Ventilsitzscheibe auf ein vorbestimmtes Mass begrenzt ist.

Diese Aufgabe wird erfindungsgemäss durch die im kennzeichnenden Teil des Anspruchs 1 angegebenen Merkmale gelöst. Hiervon ist das Merkmal, ein Dichtelement mit einem Tragelement auszustatten und an Schultern dieses Tragelements im Gehäuse zu haltern, aus der US-A Nr. 2908293 an sich bekannt. Weitere Ausgestaltungen der Erfindung sind in den Ansprüchen 2 bis 12 angegeben.

Mit diesen Massnahmen wird erreicht, dass das Dichtelement exakt zwischen der Ventilsitzscheibe und der Armatur positioniert ist, wobei der Tragkörper durch das Anliegen an entsprechend ausgebildete Anlageflächen am Gehäuse gewährleistet, dass die Ventilsitzscheibe nur eine vorbestimmte axiale Anpresskraft erfährt, während der gegenüberliegende, an der Armatur anliegende Teil des Dichtelements im Hinblick auf die individuellen Passgegebenheiten über die vorgegebene Vorspannung hinaus gepresst werden kann.

Zweckmässig weist der Tragkörper etwa eine Ringform auf, wobei an dem Tragkörper eine oder mehrere, aus dem Dichtelement vorstehende Ringflächen ausgebildet werden können, die bei der vorbestimmten Spannung an entsprechenden Ringschultern im Gehäuse zur Anlage gelangen. Zur Drehsicherung der Ventilsitzscheibe kann diese selbst mit radial vorspringenden, in Längsnuten im Gehäuse einfassenden Nasen versehen sein oder am Tragkörper werden in die angrenzenden Teile (Gehäuse, Ventilsitzscheibe) eingreifende Nasen ausgebildet.

Eine besonders vorteilhafte Ausgestaltung der Erfindung kann durch die Ausbildung von Dichtlippen an dem Dichtelement erzielt werden, wobei durch die Lippendichtung einerseits die Fertigungstoleranzen der Ventilscheiben, des Drehgliedes und des Gehäuses über einen relativ grossen Bereich bei relativ geringer Zunahme der Anpresskraft ausgeglichen werden können, während andererseits durch die Dichtlippen eine sichere Abdichtung gewährleistet ist. Zweckmässig kann die Lippendichtung von einem gegen die Mittelachse geneigten Kegelringteil gebildet werden, so dass die Dichtlippe von dem anstehenden Medium in die Dichtstellung gedrückt wird und somit auch flexibel eventuell auftretende Druckstösse abfängt.

Vorteilhaft können auch beide Stirnseiten des Dichtelements mit Lippendichtungen versehen werden, wobei zur besonders sicheren Abdichtung an der Armatur das Dichtelement in diesem Bereich mit zwei konzentrischen Dichtlippen versehbar ist, zwischen denen ein im Querschnitt V-förmiger Ringraum gebildet ist.

In weiterer Ausgestaltung der Erfindung kann die Anpresskraft der Ventilsitzscheibe auch dadurch begrenzt werden, dass radial vorspringende Nasen am Tragkörper ausgebildet sind, die beim Erreichen der vorbestimmten Vorspannung im Grund von entsprechend ausgebildeten Axialnuten im Gehäuse zur Anlage gelangen.

In weiterer Ausgestaltung der Erfindung kann der Tragkörper auch als in einer Radialnut im Gehäuse verrastbarer Sprengring ausgebildet sein, so dass die lose in das Gehäuse eingeschobenen Ventilbauteile jederzeit auch im ausgebauten Zustand in der Betriebslage sicher gehaltert sind.

Zweckmässig kann der Tragkörper mit dem Dichtelement durch Vulkanisieren oder auch Aufknöpfen verbunden werden.

Ausführungsbeispiele der Erfindung sind in der Zeichnung dargestellt und werden im folgenden näher beschrieben. Es zeigt

Fig. 1 ein Mengenregulierventil im Längsschnitt, eingebaut in einer Armatur;

Fig. 2 ein Dichtelement im Längsschnitt gemäss Fig. 1 in vergrössertem Massstab;

Fig. 3 das Dichtelement gemäss Fig. 2 in Draufsicht;

Fig. 4 ein anderes, zum Teil dargestelltes Mengenregulierventil im Längsschnitt;

Fig. 5 ein Dichtelement gemäss Fig. 4 im Längsschnitt;

Fig. 6 das Dichtelement gemäss Fig. 5 in Draufsicht;

Fig. 7 ein weiteres, zum Teil dargestelltes Mengenregulierventil im Längsschnitt;

Fig. 8 ein Dichtelement gemäss Fig. 7 im Längsschnitt;

Fig. 9 das Dichtelement gemäss Fig. 8 in Draufsicht;

Fig. 10 ein weiteres, zum Teil dargestelltes Mengenregulierventil im Längsschnitt;

Fig. 11 ein Dichtelement gemäss Fig. 10 im Längsschnitt;

Fig. 12 ein anderes Dichtelement im Längsschnitt;

Fig. 13 das Dichtelement gemäss Fig. 11 und 12 in Draufsicht.

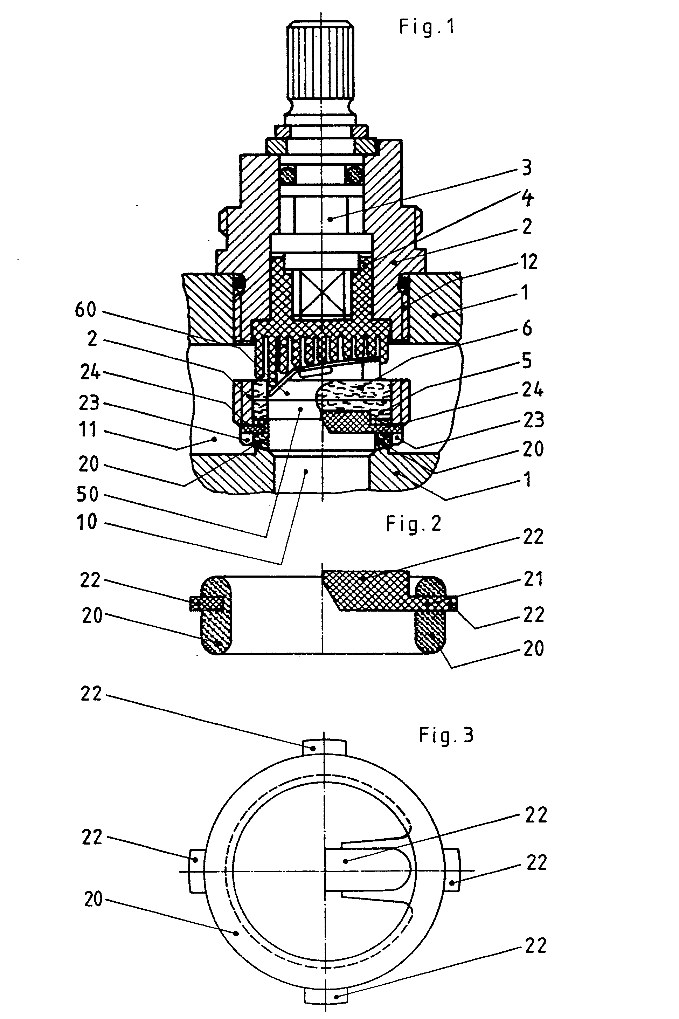

Der Einfachheit halber sind bei den verschiedenen Ausführungsbeispielen der Zeichnung gleiche

oder entsprechende Elemente mit jeweils gleichen Bezugszeichen versehen. Das in der Fig. 1 gezeigte Mengenregulierventil ist mit seinem Gehäuse 2 in einer Armatur 1 mittels eines Einschraubgewindes 12 dicht eingeschraubt. Koaxial in dem Gehäuse 2 ist eine Ventilspindel 3 drehbar gelagert, die an ihrem äusseren Ende Mittel zur Aufnahme eines in der Zeichnung nicht dargestellten Drehgriffes für die Betätigung des Ventils trägt. Der innere Endbereich der Ventilspindel 3 ist formschlüssig mit einem axial in Richtung der Ventilspindel im Gehäuse 2 abgestützen Drehglied 4 verbunden. An dem Drehglied 4 sind zwei quer zur Mittelachse angeordnete Ventilscheiben 5 und 6 axial angelagert. Beide Ventilscheiben weisen jeweils eine Durchtrittsöffnung 60, 50 auf. Die unmittelbar an dem Drehglied 4 anliegende Ventilregulierscheibe 6 ist mit diesem drehfest verbunden, während die Ventilsitzscheibe 5 drehfest im Gehäuse 2 gehaltert ist. Zur Abdichtung des Ventileinsatzes in der Armatur 1 ist zwischen der stromaufwärts gelegenen Stirnseite der Ventilsitzscheibe 5 und der Armatur 1 im Bereich des Zulaufkanals 10 ein Dichtelement 20 zwischengeordnet.

Das Dichtelement 20 ist ringförmig ausgebildet und aus einem flexiblen Material, z.B. Gummi, hergestellt. Der Aussenmantel des Dichtelements 20 wird dabei im wesentlichen vom stromaufwärtsgelegenen Bereich der zylindrischen Bohrung für die Aufnahme der Ventilscheiben radial umfangen. In dem Dichtelement 20 ist ein ringförmiger, aus einem festen, widerstandsfähigen Material hergestellter Tragkörper 21 angeordnet, welcher das Dichtelement in einen Ventilsitzscheibenbereich und einen der Armatur 1 zugekehrten Bereich unterteilt. An dem Tragkörper 21 sind symmetrisch vier radial vorragende Nasen 22 angeformt, die in entsprechende Axialnuten 23 im stromaufwärts gelegenen Bereich des Gehäuses 2 einfassen. Ausserdem trägt der Tragkörper 21 eine radial und axial vorspringende Nase 22, die in eine entsprechende Schlitzöffnung in der Ventilsitzscheibe 5 einfasst, so dass eine formschlüssige Drehsicherung zwischen dem Gehäuse 2 und der Ventilsitzscheibe 5 gebildet ist. Die Axialnuten 23 sind in ihrer axialen Länge so bemessen, dass bei einer vorbestimmten Vorspannung das Dichtelement in dem Ventilsitzscheibenbereich soweit verformt wird, dass die Nasen 22 im Grund 24 der Axialnuten zur Anlage gelangen, wodurch einne weitere Erhöhung der Anpresskraft der beiden Ventilscheiben unterbunden wird.

Durch diese Massnahmen wird erreicht, dass beim Einbau des Ventileinsatzes in den verschiedenen Armaturen beim Einschraubvorgang den Ventilscheiben nur eine vorbestimmte, für die Abdichtfunktion erforderliche Axialpressung erteilt wird, während der der Armatur bzw. dem in der Armatur ausgebildeten Ventilsitz für ein Ventiloberteil mit axial verschiebbarem Ventilglied zugewandte Teil des Dichtelements entsprechend den Toleranzen der Einbautiefe stärker verspannt werden kann. Die beiden Ventilscheiben sind dabei unabhängig von den unterschiedlichen Einbautiefen gleichbleibend leichtgängig in dem Gehäuse 2 angeordnet, so dass das aus dem Zulaufkanal 10 zufliessende Medium durch die Ventilscheiben in der Menge reguliert und radial im Bereich des Drehglieds 4 in den Ablaufkanal 11 der Armatur 1 abgegeben werden kann.

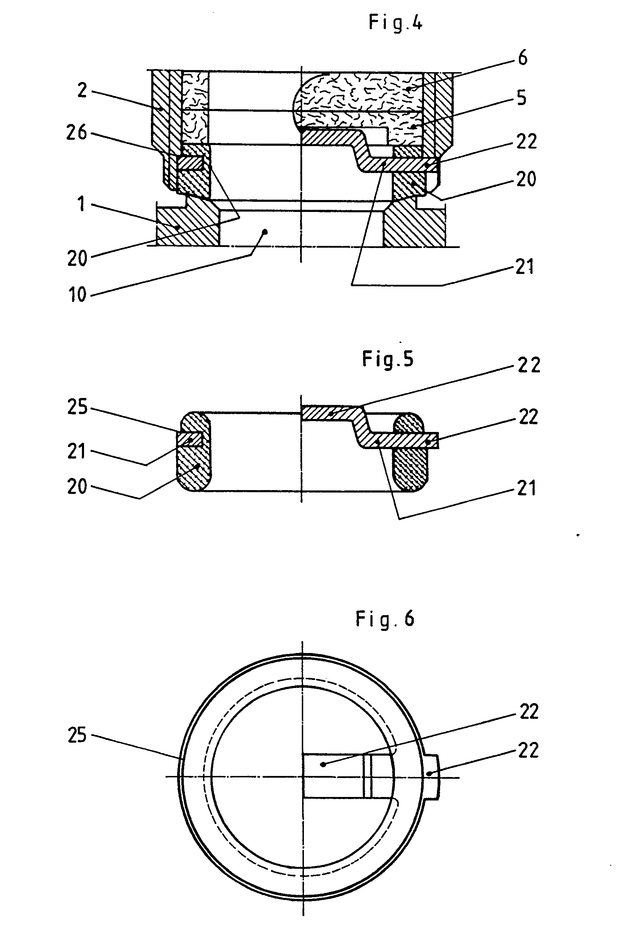

In den Fig. 4 bis 6 ist ein abgewandeltes Ausführungsbeispiel des Dichtelements 20 dargestellt, wobei das Mengenregulierventil der in der Fig. 1 dargestellten Ausführung entsprechen kann. Der Tragkörper 21 ist als geschlossener Ring ausgebildet, an dessen stromabwärts liegender Stirnseite der Aussenmantel des Dichtelements 20 zurückspringt, so dass eine ringförmige Fläche 25 gebildet wird. In der Aufnahmebohrung ist eine entsprechende absatzförmige Ringschulter 26 ausgebildet. Bei der Anpressung des Dichtelements 20 gelangt die ringförmige Fläche 25 bei einer vorbestimmten Anpresskraft zur Anlage und verhindert somit ein weiteres Ansteigen der an der Ventilsitzscheibe 5 wirkenden Anpresskraft, während der stromaufwärts gelegene Teil des Dichtelements 20 stärker verformt werden kann.

Zur Drehsicherung der Ventilsitzscheibe 5 in dem Gehäuse 2 ist an dem Tragkörper 21 eine radial vorspringende Nase 22 angeformt und gegenüberliegend bis in das Zentrum des von dem Tragkörper umschlossenen Kreises eine zungenartige, axial durch eine Verkröpfung vorspringende Nase 22, wie insbesondere Fig. 6 zu entnehmen ist, ausgebildet. Die zungenartige Nase 22 (s. Fig. 4) ragt dabei in eine entsprechende Ausnehmung in der Ventilsitzscheibe 5. Die radial vorspringende Nase 22 wird von einer Axialnute 23 aufgenommen, so dass eine formschlüssige Drehsicherung der Ventilsitzscheibe 5 entsteht.

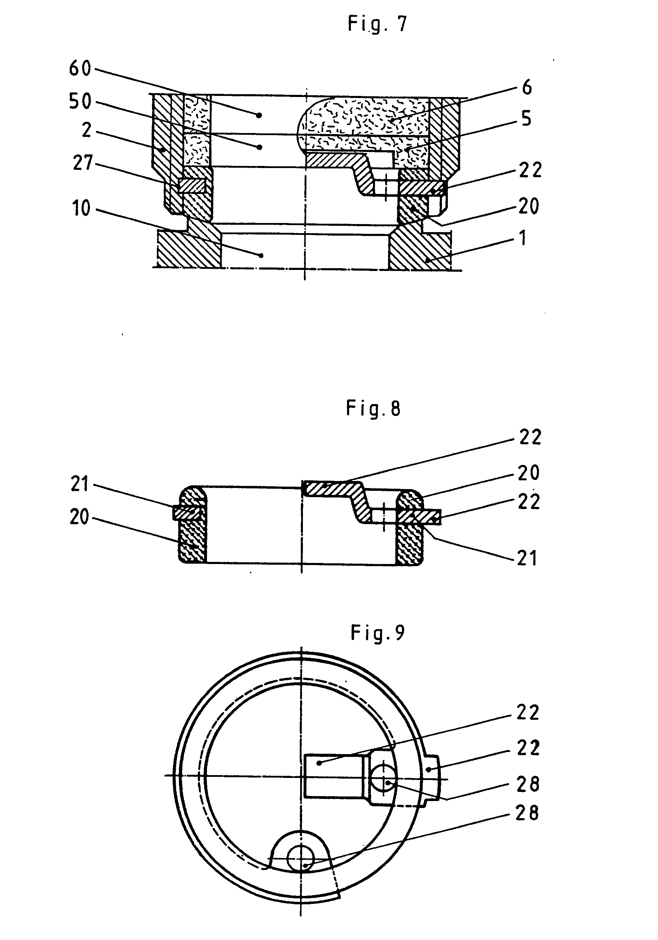

In den Fig. 7 bis 9 ist eine weitere Abwandlung des Dichtelements 20 dargestellt. Anstatt eines geschlossenen Ringes ist der Tragkörper 21 als Sprengring ausgebildet. Der Tragkörper 21 weist hierbei im Hinblick auf den Aussendurchmesser des Dichtelements einen geringfügig vergrösserten Durchmesser auf. In der Aufnahmebohrung des Gehäuses 2 ist eine entsprechende Radialnute 27 eingestochen. Damit das Dichtelement 20 einfach in das Gehäuse 2 gebracht werden kann, sind an dem Tragkörper zwei Ösen 28 für ein Werkzeug zur Einführung des Dichtelements 20 in die Aufnahmebohrung im Gehäuse 2 vorgesehen. Bei einem Verrasten des Tragkörpers 21 in der Radialnut 27 wird den Ventilscheiben die für den Betrieb erforderliche Anpressung vermittelt. Der stromaufwärts gelengene Teil des Dichtelements 20 kann dabei entsprechend den unterschiedlichen Einbautiefen unabhängig verformt werden.

Durch die Ausbildung des Tragkörpers 21 als Sprengring wird zusätzlich erreicht, dass die einzelnen Ventilorgane in dem Gehäuse 2 unabhängig von der Einbaulage betriebsbereit gehalten sind. Die Verdrehsicherung der Ventilsitzscheibe 5 ist entsprechend dem Ausführungsbeispiel in Fig. 4, 5, 6 ausgebildet.

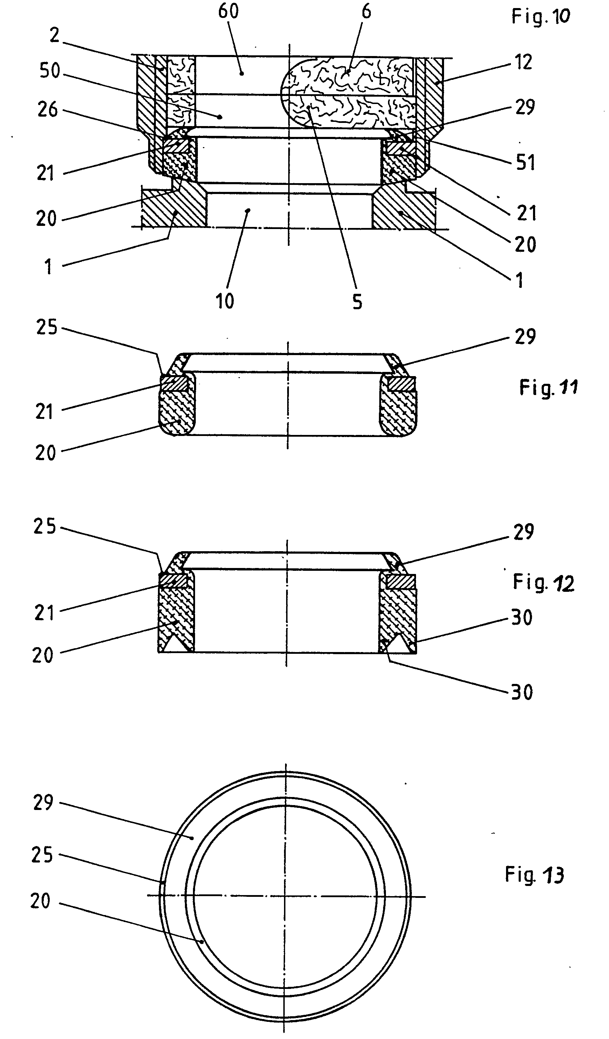

In der Fig. 10 ist schliesslich ein Mengenregulierventil gezeigt, bei dem stromaufwärts vor der Ventilregulierscheibe 6 eine Ventilsitzscheibe 5 vorgelagert ist, die mittels einer oder mehrerer radial vorspringender Nasen in entsprechenden Längsnuten 51 axial verschiebbar aber drehfest im Gehäuse 2 geführt wird. Zur Abdichtung des Ventileinsatzes in der Armatur 1 ist zwischen der stromaufwärts gelegenen Stirnseite der Ventilsitzscheibe 5 und der Armatur 1 im Bereich des Zulaufkanals 10 das Dichtelement 20 mit Tragkörper 21 zwischengeordnet. Der Tragkörper 21 ist als geschlossener Ring ausgebildet, an dessen stromabwärts liegender Stirnseite der Aussenmantel des Dichtelements 20 zurückspringt, so dass eine ringförmige Fläche 25 gebildet wird. In der Aufnahmebohrung in dem Gehäuse 2 ist eine entsprechende absatzförmige Ringschulter 26 ausgebildet, an die sich der Tragkörper 21 im eingebauten Zustand anlegt. Der Ventilscheibenbereich des Dichtelements 20 ist als Lippendichtung 29 ausgebildet, die im wesentlichen von einem etwa um 30° zur Mittelachse geneigten Kegelringteil gebildet wird. Die Lippendichtung 29 mit dem Tragkörper 21 ist hierbei so bemessen, dass bei ungünstigster Ventilteilpaarung, d.h. grösster Abstand zwischen der Ringschulter 26 und der stromaufwärts gelegenen Stirnseite der Ventilsitzscheibe 5 noch eine Abdichtung an der Ventilsitzscheibe 5 und die erforderliche Anpresskraft der beiden Ventilscheiben erzielt wird. Bei einem kleineren Abstand wird die Längenänderung durch ein Umbiegen der Lippendichtung 29 kompensiert, wobei die von dem Dichtelement 20 erzeugte Anpresskraft für die Ventilscheiben nur geringfügig erhöht wird.

In Fig. 12 ist ein abgewandeltes Ausführungsbeispiel des Dichtelements 20 gemäss Fig. 11 dargestellt. Zusätzlich zu der stromabwärts gelegenen Lippendichtung 29 sind an dem Dichtelement 20 an der stromaufwärts gelegenen Stirnseite zwei konzentrisch angeordnete Dichtlippen 30 ausgebildet.

Die Verbindung des Tragkörpers 21 mit dem Dichtelement 20 kann bei den Ausführungsbeispielen durch Aufknöpfen oder Aufvulkanisierung erfolgen.

**Patentansprüche**

1. Mengenregulierventil, insbesondere für Sanitärarmaturen, mit einem axiale Einlass- (10) und radiale Auslassöffnungen (11) aufweisenden, in Armaturen (1) einsetzbaren Gehäuse (2), in dem quer zur Längsachse eine mit wenigstens einer Durchtrittsöffnung (50) versehene Ventilsitzscheibe (5) unverdrehbar gehaltert ist und an der eine ebenfalls mit wenigstens einer Durchtrittsöffnung (60) versehene, mit einer im Gehäuse (2) gelagerten Ventilspindel (3) verdrehbare Ventilregulierscheibe (6) anliegt, wobei zwischen dem Zulaufkanal (10) der Armatur (1) und der Ventilsitzscheibe (5) ein Dichtelement (20) angeordnet ist, dadurch gekennzeichnet, dass das Dichtelement (20) mit einem Tragkörper (21) an Schultern im Gehäuse (2) gehaltert ist, derart, dass die Ventilsitzscheibe (5) nur eine bestimmte Vorspannung erhält, während der dem Zulaufkanal (10) zugekehrte Teil des Dichtelements (20) den jeweiligen Passgegebenheiten zwischen Armatur (1) und Gehäuse (2) entsprechend verformbar ist.

2. Mengenregulierventil nach Anspruch 1, dadurch gekennzeichnet, dass der Tragkörper (21) ringförmig ausgebildet ist und zur Drehsicherung der Ventilsitzscheibe (5) wenigstens jeweils eine in das Gehäuse (2) und eine in die Ventilsitzscheibe (5) eingreifende Nasen (22) hat.

3. Mengenregulierventil nach den Ansprüchen 1 und 2, dadurch gekennzeichnet, dass an dem Tragkörper (21) mehrere radial vorspringende Nasen (22) ausgebildet sind, die in entsprechende Axialnuten (23) im Gehäuse (2) einfassen, wobei die Axialnuten (23) so bemessen sind, dass bei der vorbestimmten Vorspannung der Ventilscheiben (5) die Nasen (22) im Grund (24) der Axialnuten (23) zur Anlage gelangen.

4. Mengenregulierventil nach den Ansprüchen 1 und 2, dadurch gekennzeichnet, dass der Tragkörper (21) mit einer ringförmigen Fläche (25) bei der vorbestimmten Vorspannung der Ventilscheiben an einer Ringschulter (26) im Gehäuse (2) zur Anlage gelangt.

5. Mengenregulierventil nach den Ansprüchen 1, 2 und 4, dadurch gekennzeichnet, dass der Tragkörper (21) als Sprengring ausgebildet ist und in der Vorspannstellung der Ventilscheiben in einer Radialnute (27) des Gehäuses (2) verrastbar ist.

6. Mengenregulierventil nach den Ansprüchen 1 bis 5, dadurch gekennzeichnet, dass das Dichtelement (20) auf dem Tragkörper (21) aufvulkanisiert ist.

7. Mengenregulierventil nach den Ansprüchen 1 bis 5, dadurch gekennzeichnet, dass das Dichtelement (20) auf den Tragkörper (21) aufgeknöpft ist.

8. Mengenregulierventil nach Anspruch 1, dadurch gekennzeichnet, dass wenigstens der der Ventilsitzscheibe (5) zugekehrte Bereich des Dichtelements (20) als Lippendichtung (29) ausgebildet ist.

9. Mengenregulierventil nach Anspruch 8, dadurch gekennzeichnet, dass an beiden Stirnseiten des Ventilsitzscheibes (20) Dichtlippen ausgebildet sind.

10. Mengenregulierventil nach Anspruch 8, dadurch gekennzeichnet, dass die Lippendichtung (29) von einem um ca. 30° zur Mittelachse geneigten Kegelringteil gebildet ist.

11. Mengenregulierventil nach Anspruch 10, dadurch gekennzeichnet, dass die Lippendichtung (29) eine Wandstärke von etwa 0,5 der Wandstärke des Dichtelements (20) und eine Vorkraglänge von etwa 0,4 der restlichen Länge des Dichtelements (20) hat.

12. Mengenregulierventil nach den Ansprüchen 8 bis 11, dadurch gekennzeichnet, dass die der Armatur (1) zugekehrte Stirnseite des Dichtelements (20) zwei konzentrisch angeordnete, im Querschnitt einen V-förmigen Freiraum umkreisende Dichtlippen (30) trägt.

## Claims

1. Volume control valve, in particular for sanitary fittings, with axial inlet (10) and radial outlet orifices (11) in a body (2) which can be mounted in a fitting (1) and in which a valve seat insert (5), provided with at least one through opening (50) transversely to the longitudinal axis, is held so as to be non-rotatable and to which is fitted a valve control disc (6) which is rotatable by a valve spindle (3) mounted in the body (2) and which also has at least one through opening, a sealing element (20) being fitted between the inlet orifice (10) of the fitting (1) and the valve seat insert (5), characterised by the sealing element (20) being held against shoulders in the body (2) by a supporting piece (21) in such a way that the valve insert (5) is only prestressed to a specific extent, while the face of the sealing element (20) which is towards the inlet orifice (10) is deformable in accordance with the particular conditions of fit between the fitting (1) and the body (2).

2. Volume control valve in accordance with Claim 1, characterised by the supporting piece (21) being circular and having at least one lug (22) engaging with the body (2) and one lug (22) engaging with the valve seat insert (5) to prevent the valve seat insert (5) from turning.

3. Volume control valve in accordance with Claims 1 and 2, characterised by several radially projecting lugs (22) being formed on the supporting piece (21), which lugs fit into corresponding axial grooves (23) in the body (2), the axial grooves (23) being designed so that when the valve inserts (5) are prestressed to the predetermined extent, the lugs (22) make contact with the base (24) of the axial grooves (23).

4. Volume control valve in accordance with Claims 1 and 2, characterised by the supporting piece (21) having its circular face (25) pressed against a circular shoulder (26) in the body (2) when the valve inserts are prestressed to the predetermined extent.

5. Volume control valve in accordance with Claims 1, 2 and 4, characterised by the supporting piece (21) being designed as a snap ring which, in the prestressed position of the valve inserts, locates in a radial groove (27) in the body (2).

6. Volume control valve in accordance with Claims 1 to 5, characterised by the sealing element (20) being vulcanised to the supporting piece (21).

7. Volume control element in accordance with Claims 1 to 5, characterised by the sealing element (20) being buttoned to the supporting piece (21).

8. Volume control valve in accordance with Claim 1, characterised by at least the area of the sealing element (20) facing towards the valve seat insert (5) being designed as a lip seal (29).

9. Volume control valve in accordance with Claim 8, characterised by the forming of sealing lips on both faces of the sealing element (20).

10. Volume control valve in accordance with Claim 8, characterised by the lip seal (29) being formed of a conical annular piece inclined at about 30° to the centre axis.

11. Volume control valve in accordance with Claim 10, characterised by the lip seal (29) having a wall thickness of about 0.5 of the wall thickness of the sealing element (20) and a projecting collar length of about 0.4 of the remaining length of the sealing element (20).

12. Volume control valve in accordance with Claims 8 to 11, characterised by the face of the sealing element (20) facing towards the fitting (1) having on it two concentrically arranged sealing lips (30) surrounding, in cross-section, a V-shaped space.

## Revendications

1. Vanne de contrôle de débit, en particulier pour appareil sanitaire, comprenant un orifice d'entrée axial (10) et un orifice de sortie radial (11), une cage (2) prévue pour être montée dans l'appareil (1), laquelle est maintenue perpendiculairement à l'axe longitudinal et sans possibilité de rotation, un disque de siège de vanne (5) pourvu d'au moins une ouverture d'écoulement (50) et sur lequel s'appuie un disque de contrôle de débit (6) pourvu d'au moins une ouverture d'écoulement (60) et pouvant tourner avec une tige de vanne (3) montée dans la cage (2), sur laquelle est disposé un élément d'étanchéité (20) entre le canal d'entrée (10) de l'appareil (1) et le disque de siège de vanne (5), caractérisée en ce que l'élément d'étanchéité (20) est maintenu par l'intermédiaire d'un corps-support (21) sur des épaulements de la cage (2) de telle sorte que le disque de siège de vanne (5) n'est soumis qu'à une contrainte prédéterminée, tandis que la partie de l'élément d'étanchéité (20) qui fait face au canal d'entrée (10) peut se déformer entre le corps de l'appareil (1) et la cage (2) en fonction des données d'assemblage.

2. Vanne de contrôle de débit selon la revendication 1, caractérisée en ce que le corps-support (21) a une forme annulaire et comporte, pour interdire la rotation du disque de siège de vanne (5), au moins une dent (22) qui s'engage avec la cage (2) et une dent (22) qui s'engage avec le disque de siège (5).

3. Vanne de réglage de débit selon les revendications 1 et 2, caractérisée en ce qu'il est constitué sur le corps-support (21) plusieurs dents (22), faisant saillie radialement, qui s'insèrent dans des gorges axiales (23) correspondantes (23), les gorges axiales (23) étant dimensionnées de telle sorte que les dents (22) viennent porter sur le fond (24) des gorges axiales (23) pour une contrainte prédéterminée des disques de vannes (5).

4. Vanne de contrôle de débit selon les revendications 1 et 2, caractérisée en ce que le corps-support (21) vient porter, par une surface annulaire (25), sur un épaulement annulaire (26) de la cage (2) pour une contrainte prédéterminée des disques de vanne.

5. Vanne de contrôle de débit selon les revendications 1, 2 et 4, caractérisée en ce que le corps-support (21) est constitué par un anneau-ressort et peut s'engager dans une gorge radiale (27) de la cage (2) en position de contrainte des disques de vanne.

6. Vanne de contrôle de débit selon les revendications 1 à 5, caractérisée en ce que l'élément d'étanchéité (20) est vulcanisé sur le corps-support (21).

7. Vanne de contrôle de débit selon les revendications 1 à 6, caractérisée en ce que l'élément d'étanchéité (20) est boutonné sur le corps-support (21).

8. Vanne de contrôle de débit selon la revendication 1, caractérisée en ce qu'au moins la partie de l'élément d'étanchéité (20) tournée vers le disque de siège de vanne (5) a la forme d'un joint à lèvre d'étanchéité (29).

9. Vanne de contrôle de débit selon la revendication 8, caractérisée en ce que des lèvres sont constituées sur les deux faces de l'élément d'étanchéité (20).

10. Vanne de contrôle de débit selon la revendication 8, caractérisée en ce que le joint à lèvre (29) est constitué par une pièce annulaire conique inclinée à 30° par rapport à l'axe central.

11. Vanne de contrôle de débit selon la revendication 10, caractérisée en ce que le joint à lèvre (29) a une épaisseur de paroi correspondant à la moitié (0,5 fois) environ de l'épaisseur de la paroi de l'élément d'étanchéité (20) et présente une saillie dont la longueur est 0,4 fois la longueur restante de l'élément d'étanchéité (20).

12. Vanne de contrôle de débit selon les revendications 8 à 11, caractérisée en ce que la face avant de l'élément d'étanchéité (20) qui est tournée vers le corps de l'appareil (1) comporte des lèvres (30) qui enserrent un espace libre dont la section est en forme de V.

Fig.1

Fig.2

Fig.3

Fig. 4

Fig. 5

Fig. 6

Fig. 7

Fig. 8

Fig. 9

Fig. 10

Fig. 11

Fig. 12

Fig. 13